(19) Europäisches Patentamt
European Patent Office
Office européen des brevets

(11) EP 4 582 839 A1

(12) EUROPEAN PATENT APPLICATION
published in accordance with Art. 153(4) EPC

(43) Date of publication:
**09.07.2025 Bulletin 2025/28**

(21) Application number: **23860170.2**

(22) Date of filing: **24.08.2023**

(51) International Patent Classification (IPC):
***G02B 5/02*** (2006.01) ***B32B 7/023*** (2019.01)
***B32B 27/30*** (2006.01) ***G02B 1/11*** (2015.01)

(52) Cooperative Patent Classification (CPC):
**G02B 5/0294; B32B 7/023; B32B 27/30; G02B 1/11; G02B 5/02**

(86) International application number:
**PCT/JP2023/030443**

(87) International publication number:
**WO 2024/048407 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2022 JP 2022137867**

(71) Applicant: **MITSUBISHI GAS CHEMICAL COMPANY, INC.**
**Chiyoda-ku**
**Tokyo 100-8324 (JP)**

(72) Inventors:
- **KAMEI, Shota**
  **Tokyo 125-8601 (JP)**
- **YAMAGISHI, Hiroaki**
  **Tokyo 125-8601 (JP)**
- **KAJIMOTO, Chihiro**
  **Tokyo 125-8601 (JP)**

(74) Representative: **Hoffmann Eitle**
**Patent- und Rechtsanwälte PartmbB**
**Arabellastraße 30**
**81925 München (DE)**

# (54) ANTI-GLARE LAMINATE

(57) The present invention makes it possible to provide an anti-glare laminate including at least a substrate layer and an anti-glare layer, wherein the haze (H) of the anti-glare laminate and the ten point average roughness (Rzjis) measured when the reference length of the anti-glare layer is set to 0.8 mm satisfy formula (1).

$$H/Rzjis \geq 4.0 \quad \dots (1)$$

EP 4 582 839 A1

## Description

### TECHNICAL FIELD

The present invention relates to an anti-glare laminate. More specifically, the present invention relates to an anti-glare laminate, which has anti-sparkle performance and also has high scratch resistance and adhesion to base materials, and which is excellent in glare prevention performance, and which is used as a surface material for liquid crystal display devices for vehicles, mobile phone terminals, personal computers, and tablet PCs.

### BACKGROUND ART

In a liquid crystal display device, an optical laminate for antireflection is generally provided on the outermost surface. Such an optical laminate for antireflection suppresses image reflection and reduces reflectance by scattering and interference of light.

As one of optical laminates for antireflection, an anti-glare film, in which an anti-glare layer having an uneven shape is formed on the surface of a transparent base material, is known. The anti-glare film can prevent reduction in visibility caused by reflection of external light and image reflection by scattering external light with the uneven shape on the surface thereof. Further, since the optical laminate is usually provided on the outermost surface of a liquid crystal display device, it is also required to impart hard coating properties to the optical laminate in order to prevent scratches during handling.

For display surfaces of liquid crystal display devices, organic electroluminescence (EL) display devices, etc., a mixture of fine particles and a binder resin or curable resin is usually applied to a base material to form fine unevenness on the surface, thereby preventing regular reflection and preventing image reflection.

Patent Document 1 discloses a method for forming unevenness on the surface in which dipentaerythritol hexaacrylate that is a polyfunctional acrylate and SYLYSIA 350 that is a silica particle are used for an anti-glare layer.

### PRIOR ART DOCUMENTS

### PATENT DOCUMENTS

Patent Document 1: Japanese Laid-Open Patent Publication No. 2009-66891

### DISCLOSURE OF THE INVENTION

### PROBLEMS TO BE SOLVED BY THE INVENTION

When unevenness is formed on the surface, the reflection of external light is prevented, meanwhile the display performance of a display device may be reduced. In particular, when an anti-glare film is mounted on the surface of a display device with high-definition pixels, so-called sparkle may occur because, for example, the pixels of the display device appear to be magnified due to the lens effect of unevenness of the surface, etc.

Accordingly, the present invention aims to provide an anti-glare laminate with suppressed sparkle.

### MEANS FOR SOLVING THE PROBLEMS

The present inventors diligently made researches in order to solve the above-described problem and found that the problem can be solved when the haze (H) of an anti-glare laminate and the ten point average roughness (Rzjis) of an anti-glare layer satisfy a predetermined relationship. Specifically, the present invention is as described below.

<1> An anti-glare laminate comprising at least a substrate layer and an anti-glare layer, wherein the haze (H) of the anti-glare laminate and the ten point average roughness (Rzjis) measured when the reference length of the anti-glare layer is set to 0.8 mm satisfy formula (1):

$$H/Rzjis \geq 4.0 \qquad \ldots (1)$$

<2> The anti-glare laminate according to item <1>, which has a haze of 1 to 20%.

<3> The anti-glare laminate according to item <1> or <2>, wherein the ten point average roughness (Rzjis) measured when the reference length of the anti-glare layer is set to 0.8 mm is 0.2 to 1.5 μm.

<4> The anti-glare laminate according to any one of items <1> to <3>, wherein the anti-glare layer comprises an active energy ray-curable resin and a light-diffusing fine particle.
<5> The anti-glare laminate according to any one of items <1> to <4>, wherein the anti-glare layer comprises at least a polyfunctional (meth)acryloyl group-containing monomer (A), a (meth)acryloyl group-containing polymer (B), a photopolymerization initiator (C), and a silica particle (D), and wherein the average particle diameter of the silica particle is 1 to 7 μm, and wherein the oil absorption amount of the silica particle is 30 to 250 mL/100 g.
<6> The anti-glare laminate according to item <5>, wherein the ratio of the component (A) is 40 to 90% by mass and the ratio of the component (B) is 10 to 60% by mass when the total of the component (A) and the component (B) is 100% by mass, and wherein the double bond equivalent of the component (B) is 400 g/mol or less, and wherein the weight average molecular weight of the component (B) is 5,000 to 100,000.
<7> The anti-glare laminate according to item <5>, wherein the content of the component (D) is 1 to 20% by mass when the total of the component (A) and the component (B) is 100% by mass.
<8> The anti-glare laminate according to any one of items <1> to <7>, wherein the substrate layer comprises an aromatic polycarbonate resin layer.
<9> The anti-glare laminate according to any one of items <1> to <8>, wherein the substrate layer comprises at least two layers which are an acrylic resin layer and an aromatic polycarbonate resin layer.
<10> The anti-glare laminate according to any one of items <1> to <9>, which has an optical interference layer on the anti-glare layer.
<11> The anti-glare laminate according to any one of items <1> to <10>, which has an adhesive layer on a surface of the substrate layer opposite to the anti-glare layer.

ADVANTAGEOUS EFFECT OF THE INVENTION

According to the present invention, it is possible to provide an anti-glare laminate having excellent visibility and reduced sparkle.

BRIEF DESCRIPTION OF THE DRAWINGS

FIG. 1 is a cross-sectional view showing a specific example of an anti-glare laminate according to one embodiment of the present invention. The structure of an anti-glare laminate 10 as the laminate illustrated in Figure 1 consists of an anti-glare layer 12, a polymethyl methacrylate layer (PMMA resin layer) 16, and a polycarbonate layer (PC resin layer) 20.

EMBODIMENTS FOR CARRYING OUT THE INVENTION

Hereinafter, the present invention will be described in detail. Note that the present invention is not limited to the below-described embodiments and can be arbitrarily changed within a range in which the effects of the present invention are exerted.
The anti-glare laminate of the present invention has an anti-glare layer and a substrate layer. Hereinafter, each of these layers will be described.

[Anti-glare Layer]

In the present invention, the anti-glare layer has an uneven shape on its surface. As a material constituting the anti-glare layer, an active energy-curable resin is preferably used.
The method for forming the anti-glare layer is not particularly limited, and it can be formed, for example, by applying a composition containing an active energy-curable resin onto a base material and then curing it by means of active energy ray irradiation.
In the present invention, the method for applying the composition is not particularly limited, and an already-known method can be used. Examples thereof include a spin-coating method, a dipping method, a spraying method, a slide coating method, a bar coating method, a roll coating method, a gravure coating method, a die coating method, a meniscus coating method, a flexographic printing method, a screen printing method, a beat coating method, and a brushing method.
As the active energy ray, for example, ultraviolet light can be used. As a lamp to be used for ultraviolet irradiation, a lamp having a light emission distribution at a light wavelength of 420 nm or less is used. Examples thereof include a low-pressure mercury lamp, a medium-pressure mercury lamp, a high-pressure mercury lamp, an ultrahigh pressure mercury lamp, a chemical lamp, a black light lamp, a microwave-excited mercury lamp, and a metal halide lamp. Among them, the high-pressure mercury lamp or metal halide lamp is preferred because it efficiently emits a light in the active wavelength region of the initiator and it does not often emit a short-wavelength light, which reduces viscoelastic properties of a polymer

obtained due to crosslinking, or a long-wavelength light, which heats and evaporates a reaction composition.

Examples of the method for forming unevenness on the anti-glare layer include forming with a mold. Forming with a mold can be carried out by a method in which a mold having a shape complementary to an uneven surface is prepared, a transparent base material coated with an anti-glare layer is adhered thereto, and it is subjected to ultraviolet curing.

In the method for forming unevenness on the anti-glare layer, from the viewpoint of cost, it is preferred to mix a light-diffusing fine particle into a composition for forming the anti-glare layer. As the light-diffusing fine particle, an organic fine particle or an inorganic fine particle can be used, and from the viewpoint of ensuring the hardness of the anti-glare layer, a silica particle is preferably used.

In the present invention, when the haze defined in JIS K 7136 is referred to as H and the ten point average roughness measured when the reference length defined in JIS B 0601-2001 of the surface of the anti-glare layer is set to 0.8 mm is referred to as Rzjis, the anti-glare laminate is required to satisfy H/Rzjis≥4.0, preferably satisfies 20.0≥H/Rzjis≥4.0, and more preferably satisfies 10.0≥H/Rzjis≥4.5.

In the present invention, the haze of the anti-glare laminate and the ten point average roughness (Rzjis) of the anti-glare layer can be measured according to the methods described in the Examples below.

The above-described formula means that the larger Rzjis is, the more likely it is that the uneven shape on the surface of the anti-glare layer interferes with display pixels to cause sparkle, but when the haze is large enough, sparkle is less likely to be visually recognized because of the light diffusion effect.

In the present invention, the haze of the anti-glare laminate is preferably 1 to 20%, and more preferably 3 to 15%.

Meanwhile, in the present invention, the ten point average roughness (Rzjis) measured when the reference length of the anti-glare layer is set to 0.8 mm is preferably 0.2 to 1.5 μm, and more preferably 0.5 to 1.0 μm.

In the present invention, the anti-glare layer is preferably composed of a composition containing a polyfunctional (meth)acryloyl group-containing monomer, a (meth)acryloyl group-containing polymer, a photopolymerization initiator, and a silica particle. Furthermore, in order to improve the function of the anti-glare layer, various additives can be contained. Hereinafter, components that can be preferably contained in the composition to be used as a raw material for the anti-glare layer will be described.

<Polyfunctional (Meth)acryloyl Group-Containing Monomer>

The anti-glare layer preferably contains a polyfunctional (meth)acryloyl group-containing monomer. The hardness of the anti-glare layer is improved by crosslinking the polyfunctional (meth)acryloyl group-containing monomer by means of polymerization.

In the present disclosure, the polyfunctional (meth)acryloyl group-containing monomer means a compound having two or more (meth)acryloyl groups. As the polyfunctional (meth)acryloyl group-containing monomer, one material may be used solely, or two or more materials may be used in combination.

Examples of the polyfunctional (meth)acryloyl group-containing monomer include 1,6-hexanediol (meth)acrylate, 1,9-nonanediol (meth)acrylate, bisphenol A di(meth)acrylate, trimethylolpropane tri(meth)acrylate, pentaerythritol tri(meth)acrylate, pentaerythritol tetra(meth)acrylate, dipentaerythritol penta(meth)acrylate, and dipentaerythritol hexa(meth)acrylate.

The polyfunctional (meth)acryloyl group-containing monomer may be alkylene oxide-modified or epoxy-modified. When it is alkylene oxide-modified or epoxy-modified, cure shrinkage during crosslinking can be suppressed, and heat resistance of the anti-glare layer can be improved.

The molecular weight of the polyfunctional (meth)acryloyl group-containing monomer is preferably 1000 or less, more preferably 800 or less, and even more preferably 600 or less. When the molecular weight is more than 1000, the adhesion to the base material may be reduced.

The hydroxyl value of the polyfunctional (meth)acryloyl group-containing monomer is preferably 10 mgKOH/g or more, more preferably 30 mgKOH/g or more, and even more preferably 50 mgKOH/g or more. When the hydroxyl value is less than 10 mgKOH/g, the dispersibility of the composition may be reduced.

The blending amount of the polyfunctional (meth)acryloyl group-containing monomer is preferably 40 to 90% by mass, more preferably 50 to 90% by mass, even more preferably 55 to 85% by mass, and particularly preferably 60 to 80% by mass when the total of the polyfunctional (meth)acryloyl group-containing monomer and the (meth)acryloyl group-containing polymer is 100% by mass. When the blending amount is less than 40% by mass, the adhesion between the anti-glare layer and the substrate layer may be reduced, and when the blending amount is more than 90% by mass, the heat resistance of the anti-glare layer may be reduced.

<(Meth)acryloyl Group-Containing Polymer>

The anti-glare layer preferably contains a (meth)acryloyl group-containing polymer. The (meth)acryloyl group-containing polymer suppresses cure shrinkage due to polymerization and improves heat resistance.

The (meth)acryloyl group-containing polymer can be obtained, for example, by copolymerizing (meth)acrylic acid and (meth)acrylic acid glycidyl ether to synthesize an epoxy compound having a (meth)acrylate skeleton, and adding acrylic acid, methacrylic acid or the like to the compound. A synthesis example is shown below.

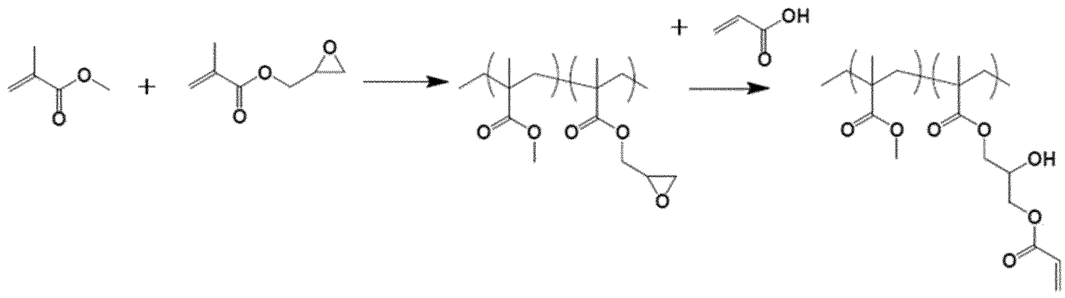

(2)

Examples of the epoxy (meth)acrylate to be used for the (meth)acryloyl group-containing polymer include those having a repeating unit represented by formula (I) below.

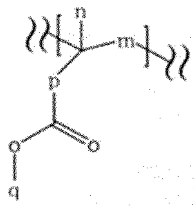

(I)

In formula (I), m is an alkylene group having 1 to 4 carbon atoms or a single bond, n is an alkyl group having 1 to 4 carbon atoms or hydrogen, p is a single bond or an alkylene group having 1 or 2 carbon atoms, and q is an alkyl group having a total carbon number of 1 to 12, which may contain at least one substituent selected from an epoxy group, a hydroxyl group, an acryloyl group, and a methacryloyl group, or hydrogen.

The epoxy (meth)acrylate polymer more preferably contains a repeating unit, wherein in formula (I) above, m is an alkylene group having 1 or 2 carbon atoms, n is an alkyl group having 1 or 2 carbon atoms, p is a single bond or a methylene group, and q is an alkyl group having a total carbon number of 1 to 6, which may contain at least one substituent selected from a glycidyl group, a hydroxyl group, and an acryloyl group, or hydrogen.

For example, in formula (I) above, m is a methylene group, n is a methyl group, p is a single bond, and q is an alkyl group having a carbon number of 5 or less, which contains a methyl group and a glycidyl group (epoxy group), an alkyl group having a carbon number of 8 or less, which contains a hydroxyl group and an acryloyl group, or the like.

Specific examples of the repeating unit contained in the epoxy (meth)acrylate polymer include those represented by formula (II-a), formula (II-b), and formula (II-c) below.

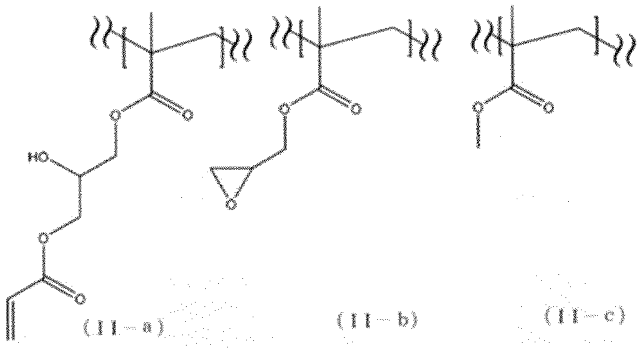

(II-a) (II-b) (II-c)

In the (meth)acrylate polymer, the content of the repeating unit of formula (II-a) above is preferably 30 to 85 mol%, and more preferably 40 to 80 mol% based on the total number of moles of the repeating unit of formula (II-a) above, the repeating unit of formula (II-b) above, and the repeating unit of formula (II-c) above. The content of the repeating unit of formula (II-b) above is preferably 5 to 30 mol%, and more preferably 10 to 25 mol% based on the above-described total number of moles. Further, the content of the repeating unit of formula (II-c) above is preferably 10 to 40 mol%, and more preferably 10 to 35 mol% based on the above-described total number of moles.

Further, the molar ratio between the repeating unit of formula (II-a), the repeating unit of formula (II-b) and the repeating unit of formula (II-c) is preferably 4.5 to 5.5:1.5 to 2.5:2.5 to 3.5, and for example, 5:2:3.

Such (meth)acryloyl group-containing polymers are commercially available and can be easily obtained. Examples thereof include SMP-220A (manufactured by Kyoeisha Chemical Co., Ltd.), SMP-250A (manufactured by Kyoeisha Chemical Co., Ltd.), SMP-360A (manufactured by Kyoeisha Chemical Co., Ltd.), SMP-550A (manufactured by Kyoeisha Chemical Co., Ltd.), HA7975 (manufactured by Showa Denko Materials Co., Ltd.), HA7975D (manufactured by Showa Denko Materials Co., Ltd.), RA-4101 (manufactured by Negami Chemical Industrial Co., Ltd.), 8KX-078 (manufactured by Taisei Fine Chemical Co., Ltd.), and 8KX-212 (manufactured by Taisei Fine Chemical Co., Ltd.).

The double bond equivalent of the (meth)acryloyl group-containing polymer is preferably 400 g/mol or less, more preferably 360 g/mol or less, and particularly preferably 250 g/mol or less. When it is more than 400 g/mol, the hardness of the anti-glare layer may be reduced.

The weight average molecular weight of the (meth)acryloyl group-containing polymer is preferably 5,000 to 100,000, more preferably 10,000 to 70,000, and even more preferably 15,000 to 50,000. When it is less than 5,000, there is a case where the effect of suppressing cure shrinkage is not obtained, and when it is more than 100,000, there is a case where the viscosity of the composition increases, resulting in difficulty in coating.

The blending amount of the (meth)acryloyl group-containing polymer is preferably 10 to 60% by mass, more preferably 10 to 50% by mass, even more preferably 15 to 45% by mass, and particularly preferably 20 to 40% by mass when the total of the polyfunctional (meth)acryloyl group-containing monomer and the (meth)acryloyl group-containing polymer is 100% by mass. When the blending amount is less than 10% by mass, the heat resistance of the anti-glare layer may be reduced, and when the blending amount is more than 60% by mass, the adhesion between the anti-glare layer and the substrate layer may be reduced.

The anti-glare layer preferably contains a silica particle. When unevenness is formed on the surface of the anti-glare layer, the silica particle provides an anti-glare effect.

Examples of the method for producing the silica particle include a dry method and a wet method. Among them, a wet method is preferred from the viewpoint of having many surface silanol groups and dispersibility with respect to the resin.

The shape of the silica particle is not particularly limited and examples thereof include a spherical shape and an amorphous shape, but an amorphous shape is more preferred since strong adhesion to the resin is provided and the effect of improving the scratch resistance of the anti-glare layer is obtained.

The average particle diameter of the silica particle is preferably 1 to 7 μm, more preferably 2 to 6 μm, and particularly preferably 3 to 5 μm. When it is less than 1 μm, no anti-glare effect can be obtained, and when it is more than 7 μm, sparkle is likely to occur. In the present invention, the average particle diameter of the silica particle can be measured by a laser diffraction method.

The oil absorption amount of the silica particle is preferably 30 to 250 mL/100 g, more preferably 70 to 230 mL/100 g, and particularly preferably 90 to 200 mL/100 g. When the oil absorption amount is less than 30 mL/100 g, the dispersibility in the resin is reduced, and when the oil absorption amount is more than 250 mL/100 g, sparkle of the anti-glare layer is likely to occur. In the present invention, the oil absorption amount of the silica particle can be measured in accordance with JIS K 5101.

Such silica particles are commercially available and can be easily obtained. Examples thereof include SYLYSIA series, SYLOPHOBIC series, and SYLOSPHERE series of Fuji Silysia Chemical Ltd., Nipsil series and NIPGEL series of Tosoh Silica Corporation, SUNSPHERE series of AGC Si-Tech Co., Ltd., REOLOSIL series of Tokuyama Corporation, and AEROSIL series of Nippon Aerosil Co., Ltd.

The blending amount of the silica particle is preferably 1 to 20% by mass, more preferably 3 to 18% by mass, and even more preferably 5 to 15% by mass when the total of the polyfunctional (meth)acryloyl group-containing monomer and the (meth)acryloyl group-containing polymer is 100% by mass. When the blending amount is less than 1% by mass, there is a case where an anti-glare effect is not obtained, and when the blending amount is more than 20% by mass, there is a case where the total light transmittance of the anti-glare laminate is reduced or sparkle is likely to occur.

The anti-glare layer preferably contains a photopolymerization initiator. Examples of the photopolymerization initiator include Omnirad 184 (1-hydroxycyclohexyl-phenyl-ketone), Omnirad 1173 (2-hydroxy-2-methyl-1-phenyl-propan-1-one), Omnirad TPO (2,4,6-trimethylbenzoyl-diphenyl-phosphine oxide), and Omnirad 819 (bis(2,4,6-trimethylbenzoyl)-phenylphosphine oxide) manufactured by IGM Resins B.V, and EsacureONE (oligo(2-hydroxy-2-methyl-1-[4-(1-methylvinyl)phenyl]propanone) manufactured by Lamberti. Among them, Omnirad 184, etc. are preferred as the photopolymerization initiator from the viewpoint of heat resistance.

In the anti-glare layer, the photopolymerization initiator is contained in an amount of preferably 1% by weight to 6% by weight based on the total weight of the anti-glare layer. The content of the photopolymerization initiator in the anti-glare layer is more preferably 2% by weight to 5% by weight, and even more preferably 3% by weight to 4% by weight.

In order to impart scratch resistance and hardness to the anti-glare layer, a nanoparticle can be added. For example, nanosilica, nanoalumina, nanotitania, nanozirconia, etc. can be used. Further, as an organic particle, nanodiamond, etc. may be used. The nanoparticle contained in the anti-glare layer is preferably treated with a surface treatment agent. By performing the surface treatment, an inorganic nanoparticle can be stably dispersed in the composition, particularly in the (meth)acryloyl group-containing polymer.

As the surface treatment agent for the nanoparticle, a compound, which has a substituent that can bind to the surface of the nanoparticle and a substituent that is highly compatible with components of a hard coat composition in which the nanoparticle is dispersed, particularly with the (meth)acryloyl group-containing polymer, is preferably used. For example, as the surface treatment agent, a silane compound, alcohol, amine, carboxylic acid, sulfonic acid, phosphonic acid, etc. may be used.

The nanoparticle preferably has a copolymerizable group on the surface thereof. The copolymerizable group can be introduced by the surface treatment of the inorganic nanoparticle, and specific examples of the copolymerizable group include a vinyl group, a meth(acrylic) group, and a free radical polymerizable group.

The average particle diameter of the nanoparticle is preferably 5 to 500 nm, more preferably 10 to 300 nm, and even more preferably 20 to 100 nm. Note that the average particle diameter of the nanoparticle is measured, for example, according to a particle size measurement method using dynamic light scattering with Zetasizer Nano ZS of Malvern Panalytical Ltd.

As commercially available nanoparticles, for example, Snowtex series and Organosilica Sol series of Nissan Chemical Corporation, ADMANANO series of Admatechs, etc. can be used.

In order to impart leveling properties, antifouling properties and abrasion resistance to the anti-glare layer, a silicone-based compound can be added. As the silicone-based compound, one having a polyalkylsiloxane bond is preferably used. As such compounds, synthetic products can be used, but commercially available products can be easily obtained. For example, KP series of Shin-Etsu Silicone, BYK series of BYK Japan KK., TEGO Glide series of EVONIK, etc. can be used.

In order to impart leveling properties, antifouling properties and abrasion resistance to the anti-glare layer, a fluorine-based compound can be added. As the fluorine-based compound, one having a perfluoropolyether bond is preferably used. As such compounds, synthetic products can be used, but commercially available products can be easily obtained. For example, Megaface RS series of DIC Corporation, KY series of Shin-Etsu Chemical Co., Ltd., Optool series of Daikin, etc. can be used.

In order to impart weather resistance to the anti-glare layer, an ultraviolet absorber can be added. Examples of the ultraviolet absorber include: a benzophenone-based ultraviolet absorber such as 2,4-dihydroxybenzophenone, 2-hydroxy-4-methoxybenzophenone, 2-hydroxy-4-n-octoxybenzophenone, 2-hydroxy-4-dodecyloxybenzophenone, 2-hydroxy-4-octadecyloxybenzophenone, 2,2'-dihydroxy-4-methoxybenzophenone, 2,2'-dihydroxy-4,4'-dimethoxybenzophenone, and 2,2',4,4'-tetrahydroxybenzophenone; a benzotriazole-based ultraviolet absorber such as 2-(2-hydroxy-5-methylphenyl)benzotriazole, 2-(2-hydroxy-3,5-di-t-butylphenyl)benzotriazole, 2-(2-hydroxy-3-t-butyl-5-methylphenyl)benzotriazole, and (2H-benzotriazol-2-yl)-4,6-bis(1-methyl-1-phenylethyl)phenol; a benzoate-based ultraviolet absorber such as phenyl salicylate and 2,4-di-t-butylphenyl-3,5-di-t-butyl-4-hydroxybenzoate; a triazine-based ultraviolet absorber such as 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, and 2,4-diphenyl-6-(2-hydroxy-4-benzyloxyphenyl)-1,3,5-triazine; and a sesamol-type benzotriazole-based ultraviolet absorber such as 2-[2-(6-hydroxybenzo[1,3]dioxol-5-yl)-2H-benzotriazol-5-yl]ethyl methacrylate, 2-[2-(6-hydroxybenzo[1,3]dioxol-5-yl)-2H-benzotriazol-5-yl]ethyl acrylate, 3-[2-(6-hydroxybenzo[1,3] dioxol-5-yl)-2H-benzotriazol-5-yl]propyl methacrylate, 3-[2-(6-hydroxybenzo[1,3]dioxol-5-yl)-2H-benzotriazol-5-yl]propyl acrylate, 4-[2-(6-hydroxybenzo[1,3]dioxol-5-yl)-2H-benzotriazol-5-yl]butyl methacrylate, 4-[2-(6-hydroxybenzo[1,3]dioxol-5-yl)-2H-benzotriazol-5-yl]butyl acrylate, 2-[2-(6-hydroxybenzo[1,3]dioxol-5-yl)-2H-benzotriazol-5-yloxy]ethyl methacrylate, 2-[2-(6-hydroxybenzo[1,3]dioxol-5-yl)-2H-benzotriazol-5-yloxy]ethyl acrylate, 2-[3-{2-(6-hydroxybenzo[1,3]dioxol-5-yl)-2H-benzotriazol-5-yl}propanoyloxy]ethyl methacrylate, 2-[3-{2-(6-hydroxybenzo[1,3]dioxol-5-yl)-2H-benzotriazol-5-yl}propanoyloxy]ethyl acrylate, 4-[3-{2-(6-hydroxybenzo[1,3]dioxol-5-yl)-2H-benzotriazol-5-yl}propanoyloxy]butyl methacrylate, 4-[3-{2-(6-hydroxybenzo[1,3]dioxol-5-yl)-2H-benzotriazol-5-yl}propanoyloxy]butyl acrylate, 2-[3-{2-(6-hydroxybenzo[1,3]dioxol-5-yl)-2H-benzotriazol-5-yl}propanoyloxy]ethyl methacrylate, 2-[3-{2-(6-hydroxybenzo[1,3]dioxol-5-yl)-2H-benzotriazol-5-yl}propanoyloxy]ethyl acrylate, 2-(methacryloyloxy)ethyl 2-(6-hydroxybenzo[1,3]dioxol-5-yl)-2H-benzotriazol-5-carboxylate, 2-(acryloyloxy)ethyl 2-(6-hydroxybenzo[1,3]dioxol-5-yl)-2H-benzotriazol-5-carboxylate, 4-(methacryloyloxy)butyl 2-(6-hydroxybenzo[1,3]dioxol-5-yl)-2H-benzotriazol-5-carboxylate, and 4-(acryloyloxy) butyl 2-(6-hydroxybenzo[1,3]dioxol-5-yl)-2H-benzotriazol-5-carboxylate. The content ratio of the ultraviolet absorber in the anti-glare layer is preferably 0 to 5% by mass, more preferably 0 to 3% by mass, and even more preferably 0 to 1% by mass. When it is more than 5% by mass, UV curing may be inhibited.

In order to impart weather resistance to the anti-glare layer, a light stabilizer can be added. As the light stabilizer, for example, a hindered amine-based light stabilizer such as bis(1,2,2,6,6-pentamethyl-4-piperidyl) sebacate, bis(2,2,6,6-tetramethylpiperidin-4-yl) sebacate, bis(1-undecanoxy-2,2,6,6-tetramethylpiperidin-4-yl) carbonate, 1,2,2,6,6-pentamethyl-4-piperidyl methacrylate, 2,2,6,6-tetramethyl-4-piperidyl methacrylate, bis[2,2,6,6-tetramethyl-1-(octyloxy)piperidin-4-yl] decanedioate, and 2-[[3,5-bis(1,1-dimethylethyl)-4-hydroxyphenyl]methyl]-2-butylpropanedioic acid bis [1,2,2,6,6-pentamethyl-4-piperidinyl] can be used. The content ratio of the light stabilizer in the anti-glare layer is preferably 0 to 5% by mass, more preferably 0 to 3% by mass, and even more preferably 0 to 1% by mass. When it is more than 5% by mass, UV curing may be inhibited.

The diluent solvent to be used for preparing the composition for forming the anti-glare layer is used to adjust the viscosity, and is not particularly limited as long as it is non-polymerizable. By using the diluent solvent, mainly the composition for forming the anti-glare layer can be easily applied onto a transparent substrate layer.

Examples of the diluent solvent include toluene, xylene, ethyl acetate, propyl acetate, butyl acetate, methyl cellosolve, ethyl cellosolve, ethyl cellosolve acetate, propylene glycol monomethyl ether acetate, methyl alcohol, ethyl alcohol, isopropyl alcohol, butyl alcohol, diacetone alcohol, acetone, methyl ethyl ketone, methyl isobutyl ketone, cyclohexanone, hexane, heptane, octane, decane, dodecane, propylene glycol monomethyl ether, and 3-methoxybutanol.

As the method for coating the substrate layer with the composition for forming the anti-glare layer, a bar coater, a gravure coater, a die coater, dip coating, spray coating, etc. can be employed.

After coating with the composition, drying is performed at a predetermined temperature. The drying temperature is preferably 30 to 150°C, and more preferably 60 to 120°C. When it is lower than 30°C, there is a high possibility that an organic solvent remains and affects physical properties of the anti-glare layer, and when it is higher than 150°C, there is a possibility that the substrate layer is deformed.

The thickness of the anti-glare layer is preferably 1 μm to 30 μm, more preferably 2 μm to 20 μm, and even more preferably 5 μm to 15 μm. When it is less than 1 μm, it is difficult to obtain desired performance, and when it is more than 30 μm, there is a possibility that warpage and flexibility may be deteriorated.

[Substrate Layer]

The substrate layer includes a thermoplastic resin. The type of the thermoplastic resin is not particularly limited, and various resins including a polycarbonate (PC) resin, an acrylic resin such as polymethyl methacrylate (PMMA), polyethylene terephthalate (PET), triacetyl cellulose (TAC), polyethylene naphthalate (PEN), polyimide (PI), a cycloolefin copolymer (COC), a norbornene-containing resin, polyether sulfone, cellophane, and aromatic polyamide may be used. Among these materials, at least a polycarbonate resin is preferably included in the thermoplastic resin of the substrate layer. More preferably, aromatic polycarbonate is used from the viewpoint of toughness and heat resistance.

The polycarbonate resin included in the substrate layer is not particularly limited as long as it contains a carbonate bond in the main chain of the molecule, i.e., it contains a -[O-R-OCO]- unit (R includes an aliphatic group, an aromatic group, or both of the aliphatic group and the aromatic group, and further has a linear structure or a branched structure), but a polycarbonate having a bisphenol skeleton, etc. are preferred, and a polycarbonate having a bisphenol A skeleton or bisphenol C skeleton is particularly preferred. As the polycarbonate resin, a mixture or copolymer of bisphenol A and bisphenol C may be used. By using a bisphenol C-based polycarbonate resin such as a polycarbonate resin consisting of only bisphenol C and a polycarbonate resin of a mixture or copolymer of bisphenol C and bisphenol A, the hardness of the substrate layer can be improved.

Further, the viscosity average molecular weight of the polycarbonate resin is preferably 15,000 to 40,000, more preferably 20,000 to 35,000, and even more preferably 22,500 to 25,000.

The acrylic resin included in the substrate layer is not particularly limited, and examples thereof include homopolymers of (meth)acrylic acid esters typified by polymethyl methacrylate (PMMA) and methyl methacrylate (MMA), copolymers of PMMA or MMA and at least one monomer other than that, and mixtures of a plurality of these resins. Among them, a (meth)acrylate including a cyclic alkyl structure excellent in low birefringence, low moisture absorbency and heat resistance is preferred. Examples of the above-described (meth)acrylic resins include, but are not limited to, ACRYPET (manufactured by Mitsubishi Rayon Co., Ltd.), DELPET (manufactured by Asahi Kasei Chemicals Corporation), and PARAPET (manufactured by Kuraray Co., Ltd.).

It is also possible to use a two-layer product including the polycarbonate resin and the acrylic resin. In this case, the anti-glare layer is preferably provided on the acrylic resin side. By using the two-layer product including the polycarbonate resin and the acrylic resin, the toughness of the substrate layer can be maintained while improving the surface hardness.

As a component other than the thermoplastic resin, an additive may be included in the substrate layer. Examples thereof include at least one additive selected from the group consisting of a thermal stabilizer, an antioxidant, a flame retardant, a flame retardant auxiliary agent, an ultraviolet absorber, a mold release agent, and a coloring agent. Further, an antistatic agent, a fluorescent brightener, an antifog additive, a flowability improving agent, a plasticizer, a dispersant, an antimicrobial agent, etc. may also be added to the substrate layer.

The substrate layer includes the thermoplastic resin in an amount of preferably 80% by mass or more, more preferably 90% by mass or more, and particularly preferably 95% by mass or more. Further, in the thermoplastic resin of the substrate layer, the polycarbonate resin is included in an amount of preferably 80% by mass or more, more preferably 90% by mass or more, and particularly preferably 95% by mass or more.

[Optical Interference Layer]

In a preferred embodiment of the present invention, an optical interference layer is provided on the anti-glare layer. The method for forming the optical interference layer is not particularly limited, and methods such as coating, vapor deposition, and sputtering can be used.
As a material for forming by coating, a coating material containing hollow silica can be used. The thickness of a layer containing hollow silica is preferably 80 to 120 nm.
As a material for forming by vapor deposition or sputtering, a metal oxide can be used. As the metal oxide, $SiO_2$, $TiO_2$, $Nb_2O_5$, etc. can be used.
Low refractive index layers and high refractive index layers are alternately laminated to form a layer having a thickness of 200 to 300 nm, thereby obtaining optical interference effects. Between the anti-glare layer and the optical interference layer, an adhesion layer of SiON, SiOx or the like may be provided in order to improve adhesion.

[Adhesive Layer]

In a preferred embodiment of the present invention, an adhesive layer is provided on a surface of the substrate layer opposite to the anti-glare layer. The method for forming the adhesive layer is not particularly limited, but it is preferably formed by a coating method. The material for the adhesive layer is not particularly limited, and an acrylic adhesive, a silicone adhesive, a urethane adhesive, etc. can be used. The thickness of the adhesive layer is not particularly limited, but it is preferably 10 μm or more, more preferably 25 μm or more, even more preferably 35 μm or more, and may be 40 μm or more. Further, the thickness of the adhesive layer is preferably 70 μm or less, and more preferably 60 μm or less. By setting the thickness within the above-described range, more appropriate adhesive properties and adhesive strength can be achieved.

[Protective film]

After drying, a protective film can be bonded to the anti-glare layer in order to prevent damage to the anti-glare layer. The surface of the protective film in contact with the anti-glare layer has an adhesive surface having appropriate adhesive strength, and the protective film is bonded to the surface of the anti-glare layer. The protective film may be a single layer consisting only of an adhesive layer, but preferably has a two-layer structure consisting of a base material and an adhesive layer. In the case of the protective film having a two-layer structure, the protective film is laminated on the anti-glare layer in a manner such that the adhesive surface of the adhesive layer is in contact with the anti-glare layer. The protective film may have a multilayer structure which further includes a layer other than the above-described base material and adhesive layer. Further, the protective film may have a single-layer structure, and even in the case of the protective film having a single-layer structure, the adhesive surface, which is the surface on the anti-glare layer side, has appropriate adhesive strength.
The base material of the protective film is preferably formed from a thermoplastic resin, and more preferably contains a polyolefin resin. As the polyolefin resin contained in the protective film, for example, polyethylene, polypropylene, etc. can be used, and it may be a homopolymer or a copolymer. Among polyolefin resins, polyethylene is preferred.
As polyethylene, low density polyethylene (LDPE), linear low density polyethylene (LLDPE), very low density polyethylene (VLDPE), medium density polyethylene (MDPE), high density polyethylene (HDPE), etc. can be used, and preferred is low density polyethylene.
Further, as a polyolefin copolymer, a copolymer of ethylene or propylene and a monomer that is copolymerizable therewith can be used. Examples of the monomer that is copolymerizable with ethylene or propylene include α-olefins, styrenes, dienes, cyclic compounds, and oxygen atom-containing compounds.
Examples of the α-olefins include 1-butene, 3-methyl-1-butene, 3-methyl-1-pentene, 4-methyl-1-pentene, 1-pentene, 1-hexene, 1-heptene, 1-octene, 1-decene, 1-tetradecene, 1-hexadecene, 1-octadecene, and 1-eicosene. Examples of the styrenes include styrene, 4-methylstyrene, and 4-dimethylaminostyrene. Examples of the dienes include 1,3-butadiene, 1,5-hexadiene, 1,4-hexadiene, and 1,7-octadiene. Examples of the cyclic compounds include norbornene and cyclopentene. Examples of the oxygen atom-containing compounds include hexenol, hexenoic acid, and methyl octanoate. These copolymerizable monomers may be used solely, or two or more of them may be used in combination. Further, a copolymer of ethylene and propylene may also be employed.

The copolymer may be any of an alternating copolymer, a random copolymer, and a block copolymer.

The polyolefin resin contained in the base material of the protective film may include a modified polyolefin resin modified with a small amount of a carboxyl group-containing monomer such as acrylic acid, maleic acid, methacrylic acid, maleic anhydride, fumaric acid, and itaconic acid. Usually, modification can be performed by copolymerization or graft modification.

The base material of the protective film contains the polyolefin resin in an amount of preferably 80% by weight or more, more preferably 90% by weight or more, and even more preferably 95% by weight or more based on the total weight of the base material.

The adhesive layer of the protective film is preferably formed from an elastomer or a thermoplastic resin. Examples of the thermoplastic resin contained in the adhesive layer include a polyolefin resin such as polypropylene and modified polyolefin. As the polyolefin resin contained in a masking film, for example, polyethylene, polypropylene, etc. can be used, and it may be a homopolymer or a copolymer. Among polyolefin resins, polyethylene is preferred.

The adhesive layer of the protective film contains the elastomer or thermoplastic resin in an amount of preferably 80% by weight or more, more preferably 90% by weight or more, and even more preferably 95% by weight or more based on the total weight of the adhesive layer.

In the anti-glare laminate, the thickness of the protective film is preferably 10 μm to 100 μm, and more preferably 20 μm to 80 μm.

## EXAMPLES

Hereinafter, the present invention will be described in more detail by way of examples. However, the present invention is not limited to the below-described examples, and can be arbitrarily changed and then carried out without departing from the gist of the present invention.

<SW Hardness>

On the surface of the anti-glare layer, #0000 steel wool was moved back and forth 15 times under a pressure of 100 $gf/cm^2$ to cause scratches. The degree of damage was evaluated on a 10-point scale by visual observation. It is described as RANK1 to RANK10.

RANK 1: no scratches (equivalent to inorganic glass)
RANK 2: 1 to 5 scratches
RANK 3: 6 to 10 scratches
RANK 4: 11 to 15 scratches
RANK 5: 16 to 20 scratches
RANK 6: 21 to 25 scratches
RANK 7: 26 to 30 scratches
RANK 8: 31 to 40 scratches
RANK 9: 41 or more scratches (equivalent to polymethacrylic acid)
RANK 10: 41 or more scratches (equivalent to polycarbonate)

<Pencil Hardness>

The measurement was carried out based on the conditions of JIS K 5600-5-4:1999, and the grade of the hardest pencil by which no scratch was made was regarded as the pencil hardness.

<Adhesion Test>

Evaluation was made according to the evaluation method of JIS K 5600-5-6:1999. Examples and Comparative Examples with evaluation results of classification 0 were evaluated as having "good" adhesion, and those with evaluation results of classification 1 to classification 5 were evaluated as having "poor" adhesion.

<Heating Test>

After the anti-glare laminate was immersed in boiling water for 30 minutes, the outer appearance thereof was visually evaluated. Examples and Comparative Examples in which there was no change were evaluated as "good", and those in which there was a change were evaluated as "poor".

<Haze>

Evaluation was made based on JIS K 7136:2000 using a haze meter "HM-150" manufactured by Murakami Color Research Laboratory Co., Ltd.

<Ten Point Average Roughness (Rzjis)>

Evaluation was made under the below-described conditions based on JIS B 0601-2001 using a surface roughness measuring machine "SURFTEST SJ-210" manufactured by Mitutoyo Corporation.

Reference length: 0.8 mm
Evaluation length: 5 times the reference length
Feed speed of stylus: 0.5 mm/s

<Oil Absorption Amount>

The measurement was carried out in accordance with JIS K 5101 using "linseed oil" manufactured by FUJIFILM Wako Pure Chemical Corporation.

<Sparkle>

The anti-glare laminate was placed on top of the iPad 6 of 265 ppi displaying a green screen (R: 29, G: 205, B: 0), with the anti-glare layer facing upward. The degree of sparkle was visually observed and evaluated according to the criteria described below.

A: almost no sparkle is observed
B: Sparkle is observed but there is no practical problem
C: Sparkle is observed and there is a practical problem

Preparation Example 1

50% by mass of DPE-6A (hexafunctional acryloyl group-containing monomer, manufactured by Kyoeisha Chemical Co., Ltd.), 50% by mass of SMP-220A (acryloyl group-containing polymer, double bond equivalent: 220 g/mol, manufactured by Kyoeisha Chemical Co., Ltd.), 3% by mass of Omnirad 184 (photopolymerization initiator, manufactured by IGM Resins B.V), and 7% by mass of SYLYSIA 430 (silica particle, average particle diameter: 4.1 μm, oil absorption amount: 230 mL/100 g, manufactured by Fuji Silysia Chemical Ltd.) were mixed and diluted with propylene glycol monoethyl ether so that the solid component concentration became 40%, and stirring was carried out for 10 minutes using a homogenizer to obtain a mixed solution.

(Example 1)

As a base material, DF02U (manufactured by Mitsubishi Gas Chemical Company, Inc., thickness: 0.180 mm), which is a two-layer product of bisphenol A type polycarbonate and PMMA, was used. The mixed solution obtained in Preparation Example 1 was applied to the PMMA side using a bar coater in a manner such that the film thickness after drying became 10 μm, and drying was carried out at 70°C for 2 minutes using an oven. After that, UV curing was carried out under nitrogen atmosphere using a UV irradiation machine manufactured by Heraeus K.K. in a manner such that the integrated light quantity became 400 mJ, and thus an anti-glare laminate was obtained.

(Example 2)

An anti-glare laminate was produced in a manner similar to that in Example 1, except that SYLYSIA 550 (silica particle, average particle diameter: 3.9 μm, oil absorption amount: 160 mL/100 g, manufactured by Fuji Silysia Chemical Ltd.) was used instead of SYLYSIA 430 of Preparation Example 1.

(Example 3)

An anti-glare laminate was produced in a manner similar to that in Example 1, except that SYLYSIA 730 (silica particle, average particle diameter: 4.0 μm, oil absorption amount: 95 mL/100 g, manufactured by Fuji Silysia Chemical

Ltd.) was used instead of SYLYSIA 430 of Preparation Example 1.

(Example 4)

An anti-glare laminate was produced in a manner similar to that in Example 1, except that SYLOPHOBIC 200 (silica particle, average particle diameter: 3.9 μm, oil absorption amount: 230 mL/100 g, manufactured by Fuji Silysia Chemical Ltd.) was used instead of SYLYSIA 430 of Preparation Example 1.

(Example 5)

An anti-glare laminate was produced in a manner similar to that in Example 1, except that 20SM-C11 (silica particle, average particle diameter: 2.0 μm, oil absorption amount: 35 mL/100 g, manufactured by Admatechs) was used instead of SYLYSIA 430 of Preparation Example 1.

(Example 6)

An anti-glare laminate was produced in a manner similar to that in Example 1, except that the amount of DPE-6A of Preparation Example 1 was changed to 70% by mass, that the amount of SMP-220A of Preparation Example 1 was changed to 30% by mass, and that SYLYSIA 550 was used instead of SYLYSIA 430.

(Example 7)

An anti-glare laminate was produced in a manner similar to that in Example 1, except that SMP-250A (acryloyl group-containing polymer, double bond equivalent: 360 g/mol, manufactured by Kyoeisha Chemical Co., Ltd.) was used instead of SMP-220A of Preparation Example 1, and that SYLYSIA 550 was used instead of SYLYSIA 430.

(Example 8)

An anti-glare laminate was produced in a manner similar to that in Example 1, except that SMP-360A (acryloyl group-containing polymer, double bond equivalent: 360 g/mol, manufactured by Kyoeisha Chemical Co., Ltd.) was used instead of SMP-220A of Preparation Example 1, and that SYLYSIA 550 was used instead of SYLYSIA 430.

(Example 9)

An anti-glare laminate was produced in a manner similar to that in Example 1, except that PE-3A (trifunctional acryloyl group-containing monomer, manufactured by Kyoeisha Chemical Co., Ltd.) was used instead of DPE-6A of Preparation Example 1, and that SYLYSIA 550 was used instead of SYLYSIA 430.

(Comparative Example 1)

An anti-glare laminate was produced in a manner similar to that in Example 1, except that SYLYSIA 350 (silica particle, average particle diameter: 3.9 μm, oil absorption amount: 320 mL/100 g, manufactured by Fuji Silysia Chemical Ltd.) was used instead of SYLYSIA 430 of Preparation Example 1.

(Comparative Example 2)

An anti-glare laminate was produced in a manner similar to that in Example 1, except that SUNSPHERE H-33 (silica particle, average particle diameter: 3.0 μm, oil absorption amount: 400 mL/100 g, manufactured by AGC Si-Tech Co., Ltd.) was used instead of SYLYSIA 430 of Preparation Example 1.

(Comparative Example 3)

An anti-glare laminate was produced in a manner similar to that in Example 1, except that Nipsil E-1011 (silica particle, average particle diameter: 4.2 μm, oil absorption amount: 350 mL/100 g, manufactured by Tosoh Silica Corporation) was used instead of SYLYSIA 430 of Preparation Example 1.

(Comparative Example 4)

An anti-glare laminate was produced in a manner similar to that in Example 1, except that Nipsil E-1009 (silica particle, average particle diameter: 5.6 μm, oil absorption amount: 350 mL/100 g, manufactured by Tosoh Silica Corporation) was used instead of SYLYSIA 430 of Preparation Example 1.

The evaluation results of the anti-glare laminates obtained in Examples 1 to 9 and Comparative Examples 1 to 4 are shown in Tables 1 and 2 below.

Table 1

| Components | Materials | Examples | | | | | | | | |
|---|---|---|---|---|---|---|---|---|---|---|
| | | 1 | 2 | 3 | 4 | 5 | 6 | 7 | 8 | 9 |
| Polyfunctional (meth) acryloyl group-containing monomer | DPE-6A | 50 | 50 | 50 | 50 | 50 | 70 | 50 | 50 | |
| | PE-3A | | | | | | | | | 50 |
| (Meth)acryloyl group-containing polymer | SMP-220A | 50 | 50 | 50 | 50 | 50 | 30 | | | 50 |
| | SMP-250A | | | | | | | 50 | | |
| | SMP-360A | | | | | | | | 50 | |
| Photopolymerization initiator | Omnirad 184 | 3 | 3 | 3 | 3 | 3 | 3 | 3 | 3 | 3 |
| Silica particle | SYLYSIA 430 | 7 | | | | | | | | |
| | SYLYSIA 550 | | 7 | | | | 7 | 7 | 7 | 7 |
| | SYLYSIA 730 | | | 7 | | | | | | |
| | SYLOPHOBIC 200 | | | | 7 | | | | | |
| | 20SM-C11 | | | | | 7 | | | | |
| | SYLYSIA 350 | | | | | | | | | |
| | SUNSPHERE H-33 | | | | | | | | | |
| | E-1011 | | | | | | | | | |
| | E-1009 | | | | | | | | | |
| Oil absorption amount of silica particle | mL/100 g | 230 | 160 | 95 | 230 | 35 | 160 | 160 | 160 | 160 |
| SW hardness | RANK | 1 | 1 | 1 | 1 | 1 | 1 | 1 | 2 | 1 |
| Pencil hardness | | 4H | 4H | 4H | 4H | 4H | 4H | 4H | 4H | 4H |
| Adhesion test | | Good | Good | Good | Good | Good | Good | Good | Good | Good |
| Heating test | | Good | Good | Good | Good | Good | Good | Good | Good | Good |
| Haze (H) | % | 4.8 | 5.5 | 16.4 | 4.1 | 4.1 | 5.0 | 4.4 | 3.8 | 8.3 |
| Ten point average roughness (Rzjis) | μm | 1.10 | 0.60 | 0.29 | 0.80 | 0.50 | 0.96 | 0.88 | 0.94 | 1.48 |
| H/Rzjis | | 4.4 | 9.2 | 56.6 | 5.1 | 8.2 | 5.2 | 5.0 | 4.0 | 5.6 |
| Sparkle | | B | A | A | A | A | A | A | A | A |

Table 2

| Components | Materials | Comparative Examples | | | |
|---|---|---|---|---|---|
| | | 1 | 2 | 3 | 4 |
| Polyfunctional (meth)acryloyl group-containing monomer | DPE-6A | 50 | 50 | 50 | 50 |
| | PE-3A | | | | |
| (Meth)acryloyl group-containing polymer | SMP-220A | 50 | 50 | 50 | 50 |
| | SMP-250A | | | | |
| | SMP-360A | | | | |
| Photopolymerization initiator | Omnirad 184 | 3 | 3 | 3 | 3 |
| Silica particle | SYLYSIA 430 | | | | |
| | SYLYSIA 550 | | | | |
| | SYLYSIA 730 | | | | |
| | SYLOPHOBIC 200 | | | | |
| | 20SM-C11 | | | | |
| | SYLYSIA 350 | 7 | | | |
| | SUNSPHERE H-33 | | 7 | | |
| | E-1011 | | | 7 | |
| | E-1009 | | | | 7 |
| Oil absorption amount of silica particle | mL/100 g | 320 | 400 | 350 | 350 |
| SW hardness | RANK | 1 | 1 | 1 | 1 |
| Pencil hardness | | 4H | 4H | 4H | 4H |
| Adhesion test | | Good | Good | Good | Good |
| Heating test | | Good | Good | Good | Good |
| Haze (H) | % | 3.5 | 12.7 | 1.9 | 5.3 |
| Ten point average roughness (Rzjis) | μm | 1.3 | 3.8 | 1.0 | 1.5 |
| H/Rzjis | | 2.7 | 3.3 | 1.9 | 3.5 |
| Sparkle | | C | C | C | C |

**Claims**

1. An anti-glare laminate comprising at least a substrate layer and an anti-glare layer, wherein a haze (H) of the anti-glare laminate and a ten point average roughness (Rzjis) measured when a reference length of the anti-glare layer is set to 0.8 mm satisfy formula (1):

$$H/Rzjis \geq 4.0 \qquad \ldots (1)$$

2. The anti-glare laminate according to claim 1, which has a haze of 1 to 20%.

3. The anti-glare laminate according to claim 1 or 2, wherein the ten point average roughness (Rzjis) measured when the reference length of the anti-glare layer is set to 0.8 mm is 0.2 to 1.5 μm.

4. The anti-glare laminate according to any one of claims 1 to 3, wherein the anti-glare layer comprises an active energy ray-curable resin and a light-diffusing fine particle.

5. The anti-glare laminate according to any one of claims 1 to 4, wherein the anti-glare layer comprises at least a

polyfunctional (meth)acryloyl group-containing monomer (A), a (meth)acryloyl group-containing polymer (B), a photopolymerization initiator (C), and a silica particle (D), and wherein an average particle diameter of the silica particle is 1 to 7 μm, and wherein an oil absorption amount of the silica particle is 30 to 250 mL/100 g.

**6.** The anti-glare laminate according to claim 5, wherein a ratio of the component (A) is 40 to 90% by mass and a ratio of the component (B) is 10 to 60% by mass when a total of the component (A) and the component (B) is 100% by mass, and wherein a double bond equivalent of the component (B) is 400 g/mol or less, and wherein a weight average molecular weight of the component (B) is 5,000 to 100,000.

**7.** The anti-glare laminate according to claim 5, wherein a content of the component (D) is 1 to 20% by mass when a total of the component (A) and the component (B) is 100% by mass.

**8.** The anti-glare laminate according to any one of claims 1 to 7, wherein the substrate layer comprises an aromatic polycarbonate resin layer.

**9.** The anti-glare laminate according to any one of claims 1 to 8, wherein the substrate layer comprises at least two layers which are an acrylic resin layer and an aromatic polycarbonate resin layer.

**10.** The anti-glare laminate according to any one of claims 1 to 9, which has an optical interference layer on the anti-glare layer.

**11.** The anti-glare laminate according to any one of claims 1 to 10, which has an adhesive layer on a surface of the substrate layer opposite to the anti-glare layer.

[Figure 1]

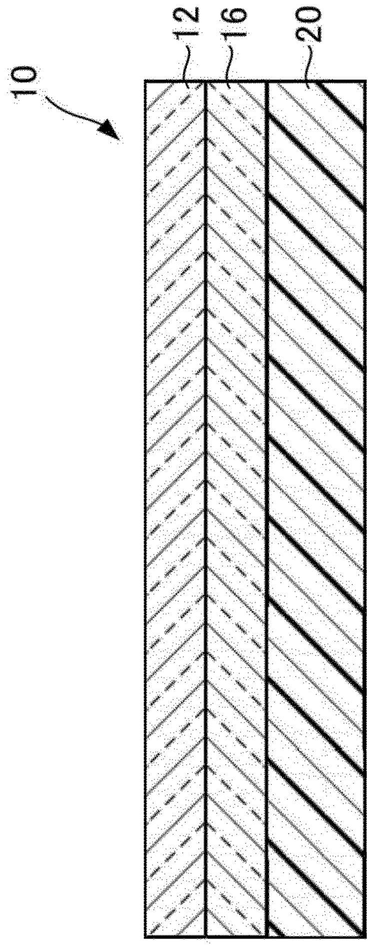

## INTERNATIONAL SEARCH REPORT

International application No. **PCT/JP2023/030443**

**A. CLASSIFICATION OF SUBJECT MATTER**

***G02B 5/02***(2006.01)i; ***B32B 7/023***(2019.01)i; ***B32B 27/30***(2006.01)i; ***G02B 1/11***(2015.01)i
FI: G02B5/02 B; B32B7/023; B32B27/30 A; G02B1/11

According to International Patent Classification (IPC) or to both national classification and IPC

**B. FIELDS SEARCHED**

Minimum documentation searched (classification system followed by classification symbols)

G02B5/02; B32B7/023; B32B27/30; G02B1/11

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | WO 2018/070300 A1 (DAICEL CORP.) 19 April 2018 (2018-04-19) paragraphs [0024], [0026], [0041], [0042], [0174], [0179], examples 1, 3-5, 8-13, comparative examples 1, 4, 8-13 | 1-9, 10, 11<br><br>5-7 |
| X | JP 2006-124517 A (ASAHI KASEI CHEMICALS CORP.) 18 May 2006 (2006-05-18) paragraph [0001], examples 1-12 | 1, 4, 8-11 |
| X<br><br>Y | WO 2020/145370 A1 (DAI NIPPON PRINTING CO., LTD.) 16 July 2020 (2020-07-16) paragraph [0097], examples 1-5, comparative examples 1-3 | 1-11<br><br>5-7 |
| X<br><br>Y | WO 2020/075835 A1 (DAI NIPPON PRINTING CO., LTD.) 16 April 2020 (2020-04-16) paragraph [0026], examples 2-4, comparative example 1, reference examples 1, 2 | 1-11<br><br>5-7 |
| X<br><br>Y | WO 2017/061493 A1 (DAI NIPPON PRINTING CO., LTD.) 13 June 2017 (2017-06-13) paragraph [0117], example 2, comparative examples 1-3 | 1-11<br><br>5-7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 September 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/030443**

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2013/047184 A1 (KIMOTO CO., LTD.) 04 April 2013 (2013-04-04) paragraph [0085], examples 1, 2, comparative examples 1-6 | 1-11<br>5-7 |
| Y | WO 2018/143167 A1 (DAI NIPPON PRINTING CO., LTD.) 09 August 2018 (2018-08-09) paragraphs [0195], [0199], [0200] | 5-7 |
| Y | WO 2014/109370 A1 (DAI NIPPON PRINTING CO., LTD.) 17 July 2014 (2014-07-17) examples 5, 8 | 5-7 |
| Y | JP 2016-141742 A (FUJIFILM CORP.) 08 August 2016 (2016-08-08) paragraph [0067] | 5-7 |
| Y | JP 2010-085759 A (FUJIFILM CORP.) 15 April 2010 (2010-04-15) paragraph [0078] | 5-7 |
| Y | JP 2010-060743 A (FUJIFILM CORP.) 18 March 2010 (2010-03-18) paragraph [0063] | 5-7 |
| Y | JP 2007-047722 A (NITTO DENKO CORP.) 22 February 2007 (2007-02-22) paragraph [0015] | 5-7 |

Form PCT/ISA/210 (second sheet) (January 2015)

**INTERNATIONAL SEARCH REPORT**
**Information on patent family members**

International application No.
**PCT/JP2023/030443**

| Patent document cited in search report | Publication date (day/month/year) | Patent family member(s) | Publication date (day/month/year) |
|---|---|---|---|
| WO 2018/070300 A1 | 19 April 2018 | CN 109804276 A<br>KR 10-2019-0059969 A<br>TW 201827510 A | |
| JP 2006-124517 A | 18 May 2006 | (Family: none) | |
| WO 2020/145370 A1 | 16 July 2020 | US 2022/0373720 A1<br>paragraph [0226], examples 1-5, comparative examples 1-3<br>CN 113302524 A<br>KR 10-2021-0113283 A<br>TW 202033983 A | |
| WO 2020/075835 A1 | 16 April 2020 | (Family: none) | |
| WO 2017/061493 A1 | 13 June 2017 | US 2018/0364400 A1<br>example 2, comparative examples 1-3<br>KR 10-2018-0063259 A<br>CN 108351440 A<br>TW 201732391 A | |
| WO 2013/047184 A1 | 04 April 2013 | TW 201314247 A | |
| WO 2018/143167 A1 | 09 August 2018 | US 2019/0391308 A1<br>paragraphs [0207], [0212], [0213]<br>EP 3579029 A1<br>CN 110226112 A<br>KR 10-2019-0109519 A<br>TW 201840426 A | |
| WO 2014/109370 A1 | 17 July 2014 | US 2015/0355386 A1<br>examples 5, 8<br>CN 104903763 A<br>KR 10-2015-0105331 A<br>TW 201441039 A | |
| JP 2016-141742 A | 08 August 2016 | US 2017/0321114 A1<br>paragraph [0106]<br>WO 2016/125481 A1<br>KR 10-2017-0102507 A | |
| JP 2010-085759 A | 15 April 2010 | US 2010/0079869 A1<br>paragraph [0143] | |
| JP 2010-060743 A | 18 March 2010 | US 2010/0053756 A1<br>paragraph [0117] | |
| JP 2007-047722 A | 22 February 2007 | US 2006/0132922 A1<br>paragraph [0015]<br>KR 10-2006-0072072 A<br>CN 1794016 A<br>TW 200639050 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009066891 A